# FASCICULE DE BREVET EUROPEEN

(11) **EP 3 768 547 B1**
(45) Date de publication et mention de la délivrance du brevet: **10.07.2024**
(21) Numéro de dépôt: 19759637.2
(22) Date de dépôt: 04.02.2019
(51) Int. Cl.: B60N 2/01, B62D 25/20, B60N 2/26

(54) **PIÈCE MOULÉE POUR LA PROTECTION DE CÂBLES D'UN FREIN À MAIN D'UN VÉHICULE EN PRÉSENCE D'UNE JAMBE DE CALAGE D'UN SIÈGE D'ENFANT**
FORMTEIL ZUM SCHUTZ VON KABELN EINER FAHRZEUGHANDBREMSE IN GEGENWART EINES SPANNELEMENTS EINES KINDERSITZES
MOULDED PART FOR PROTECTING CABLES OF A VEHICLE HAND BRAKE IN THE PRESENCE OF A BRACING ELEMENT OF A CHILD SEAT

(30) Priorité: 23.03.2018 FR 1852521
(43) Date de publication de la demande: 27.01.2021
(73) Titulaire: Stellantis Auto SAS, 78300 Poissy (FR)
(72) Inventeur: TAILLEVENT, Christophe, 77220 TOURNAN EN BRIE (FR); ROBERT, Jacques, 92400 COURBEVOIE (FR)
(86) Numéro de dépôt international: PCT/FR2019/050242
(87) Numéro de publication internationale: WO 2019/180332

(56) Documents cités:
- FR-A1- 2 915 452
- FR-A1- 3 041 924
- JP-A- H0 325 066

## Description

L'invention concerne les véhicules, et plus précisément le calage des embases des sièges d'enfant destinés à être installés sur les sièges arrière de véhicules.

Certains véhicules comprennent un plancher sur lequel sont installés des sièges avant, au moins un siège arrière, et, entre ces sièges avant, un frein à main couplé à des moyens de freinage via des câbles ayant une partie logée dans une zone arrière de l'embase du frein à main, située devant une partie centrale du siège arrière adaptée au couplage d'une embase de siège d'enfant. Certaines de ces embases de siège d'enfant comprennent une partie arrière munie de points d'ancrage (généralement deux et éventuellement de type isofix), destinés à permettre leur solidarisation fixe, de façon temporaire, à une partie centrale d'un siège arrière de véhicule, et une partie avant à laquelle est solidarisée fixement une jambe de calage. Cette dernière comprend une extrémité inférieure destinée à s'appuyer sur la zone arrière de l'embase du frein à main (située devant la partie centrale du siège arrière et généralement masquée par un tapis). Le document FR2915452 décrit un véhicule utilitaire comprenant un plancher de charge, situé derrière des sièges avant, qui est supporté en partie avant par un renfort relié au plancher du véhicule et comportant une ouverture de passage d'un câble de commande de frein à main. En cas de freinage important du véhicule et/ou de choc subi par ce dernier, l'extrémité inférieure de la jambe de calage exerce une pression très importante sur la zone arrière précitée (typiquement 600 daN à 800 daN). Or, une telle pression peut induire des dommages sur l'embase du frein à main et/ou la partie des câbles et/ou le palonnier du frein à main qui est/sont logé(e)(s) dans cette embase sous le tapis de plancher que contacte cette extrémité inférieure, ce qui peut rendre inopérante toute action sur le frein à main ou au mieux induire un dérèglement du freinage commandé par ce dernier. Le tapis de plancher n'est en effet pas conçu pour protéger la zone arrière de l'embase du frein à main.

L'invention a notamment pour but d'améliorer la situation.
Elle propose notamment à cet effet un véhicule, éventuellement de type automobile, et comprenant un plancher sur lequel sont installés des sièges avant, au moins un siège arrière, et, entre les sièges avant, un frein à main couplé à des moyens de freinage via des câbles ayant une partie placée dans une zone située devant une partie centrale du siège arrière adaptée au couplage d'une embase de siège d'enfant, comprenant également une pièce moulée couplée à cette zone. Cette pièce moulée comprend :
- des moyens de couplage destinés à être couplés à la zone précitée, et
- une paroi destinée à être placée au-dessus des câbles et définissant une surface d'appui pour une extrémité inférieure d'une jambe de calage de l'embase du siège d'enfant et une interface de protection pour les câbles.
Les moyens de couplage comprennent deux protubérances saillant d'une face inférieure de sa paroi et destinées à être logées dans deux trous définis dans une zone arrière de l'embase du frein à main (définissant la zone de passage des câbles), de part et d'autre des câbles ;

Grâce à cette pièce moulée résistant aux fortes pressions exercées par l'extrémité inférieure d'une jambe de calage d'embase de siège d'enfant en cas de freinage et/ou de choc, on évite avantageusement d'endommager les câbles et/ou le palonnier du frein à main, ce qui permet de maintenir ce dernier opérant lorsqu'il est actionné.

La pièce moulée selon l'invention peut comporter d'autres caractéristiques qui peuvent être prises séparément ou en combinaison, et notamment :
- sa paroi peut avoir une forme qui épouse une forme de la zone de passage des câbles ;
   > sa paroi peut comprendre une première partie destinée à être placée à un premier niveau et une seconde partie prolongeant cette première partie via un décrochement vers le bas et destinée à être placée à un second niveau inférieur à ce premier niveau ;
- sa paroi peut comprendre une ondulation définissant une alternance de nervures supérieures et inférieures destinées à être placées parallèlement à une direction longitudinale du véhicule ;
   > l'ondulation peut être définie au moins dans la seconde partie de la paroi ;
- les protubérances peuvent saillir de la face inférieure de la première partie de la paroi.

Par exemple, ce véhicule peut aussi comprendre un tapis placé sur le plancher devant le siège arrière et au-dessus de la pièce moulée afin de masquer cette dernière.

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes et certains niveaux de gris), sur lesquels :
- la figure 1 illustre de façon schématique, dans une vue en perspective du dessus, une partie d'un exemple de plancher de véhicule équipé d'un siège arrière sur lequel est installée en position centrale une embase à jambe de calage et à laquelle est couplé un siège d'enfant, avant l'installation d'un frein à main et de la pièce moulée selon l'invention,
- la figure 2 illustre de façon schématique, dans une vue en perspective du dessus, une partie d'un exemple de plancher de véhicule équipé d'un frein à main et d'une pièce moulée selon l'invention,
- la figure 3 illustre de façon schématique, dans une vue en perspective du dessus, un exemple de réalisation d'une pièce moulée selon l'invention, et
- la figure 4 illustre de façon schématique, dans une vue en perspective de côté et partiellement éclatée, une embase de frein à main installée sur un plancher de véhicule et à laquelle sont couplés des câbles et la pièce moulée de la figure 3.

L'invention a notamment pour but de proposer une pièce moulée 6, destinée à équiper un véhicule 1 comprenant un plancher 2 sur lequel sont installés des sièges avant, au moins un siège arrière 23, et, entre ces sièges avant, un frein à main 3, et à protéger efficacement des câbles 4 de ce frein à main 3 en présence d'une embase 5 de siège d'enfant 24 en cas de de freinage important du véhicule 1 et/ou de choc subi par ce dernier (1).

Dans ce qui suit, on considère, à titre d'exemple non limitatif, que la pièce moulée 6 est destinée à équiper un véhicule automobile 1, comme par exemple une voiture. Mais l'invention n'est pas limitée à ce type de véhicule. Elle concerne en effet tout type de véhicule comprenant un plancher équipé de sièges avant, d'au moins un siège arrière, et, entre ces sièges avant, d'un frein à main couplé à des moyens de freinage via des câbles.

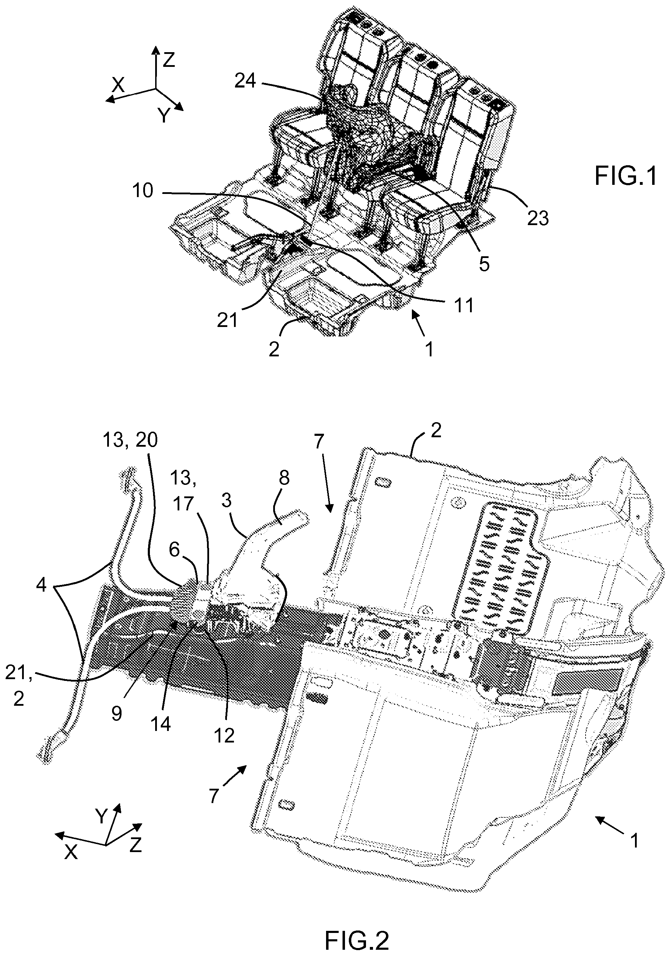

Sur les figures 1 à 4, la direction X est une direction dite longitudinale du fait qu'elle est parallèle à un côté longitudinal d'un véhicule 1, la direction Y est une direction dite transversale du fait qu'elle est perpendiculaire aux côtés longitudinaux de ce véhicule 1 et donc perpendiculaire à la direction longitudinale X, et la direction Z est une direction verticale, perpendiculaire aux directions longitudinale X et transversale Y.

On a schématiquement illustré sur la figure 1 une partie d'un exemple de plancher 2 d'un véhicule 1 équipé d'un siège arrière 23 sur lequel est installée en position centrale une embase 5 comprenant une jambe de calage 10 et à laquelle est couplé un siège d'enfant 24, avant l'installation d'un frein à main 3 et d'une pièce moulée 6 selon l'invention.

Par ailleurs, on a schématiquement illustré sur la figure 2 une autre partie de ce plancher 2 équipée d'un frein à main 3 et d'une pièce moulée 6 selon l'invention, avant l'installation des sièges avant.

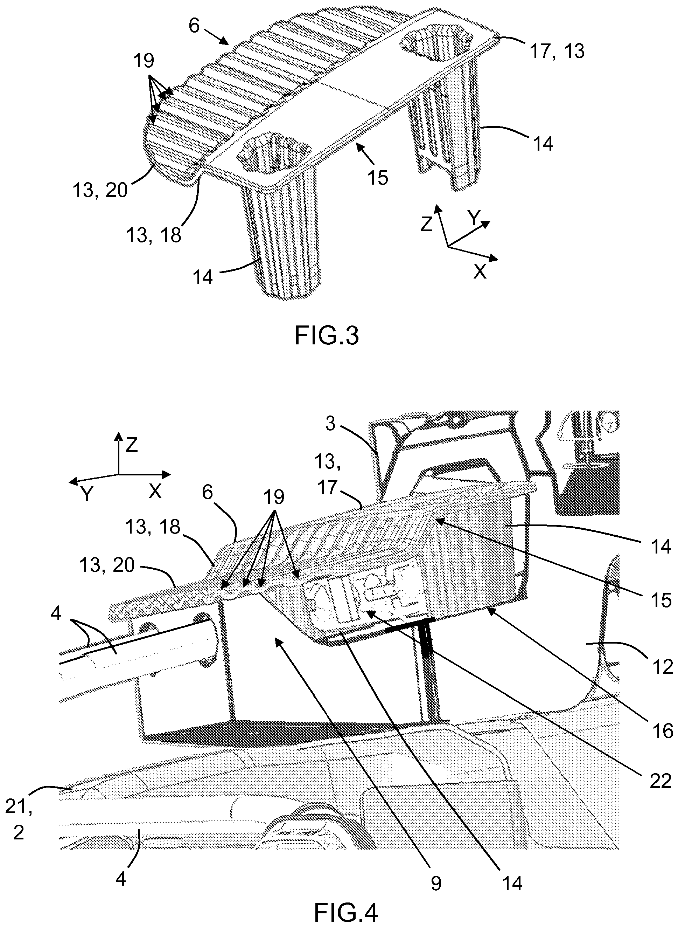

Le frein à main 3 est installé dans une partie du plancher 2 qui est située entre les emplacements 7 dédiés aux sièges avant (au nombre d'au moins deux). Par exemple, et comme illustré non limitativement sur les figures 2 et 4, ce frein à main 3 peut être installé sur un élément 21 du plancher 2 que l'homme de l'art appelle généralement le tunnel.

Par ailleurs, ce frein à main 3 est couplé à des moyens de freinage du véhicule 1 via des câbles 4 qui ont une partie placée dans une zone 9 située devant une partie centrale d'un siège arrière 23. On notera que le véhicule 1 doit comporter au moins un siège arrière 23 ayant une partie centrale installée dans une position centrale, c'est-à-dire en ayant le frein à main 3 situé devant lui dans l'axe longitudinal médian du véhicule 1. Par exemple, ce siège arrière 23 peut être une banquette. Mais dans une variante le véhicule 1 pourrait comporter deux ou trois sièges arrière.

Il est également important de noter que la partie centrale du siège arrière 23 est adaptée au couplage d'une embase 5 de siège d'enfant 24, comme illustré sur la figure 1. Cette embase 5 comprend une partie arrière orientée vers le dossier du siège arrière 23 et une partie avant orientée vers le frein à main 3. La partie arrière de l'embase 5 est munie d'au moins deux points d'ancrage, par exemple de type isofix (norme ISO 13216-1 :1999), et destinés à permettre sa solidarisation fixe, de façon temporaire, à des points d'ancrage correspondants de la partie centrale du siège arrière 23. Comme cela est partiellement illustré sur la figure 1, la partie avant de l'embase 5 a une extrémité supérieure d'une jambe de calage 10 qui lui est solidarisée fixement. Cette jambe de calage 10 a par ailleurs une extrémité inférieure 11 qui est destinée à s'appuyer sur la zone 9 (située devant la partie centrale du siège arrière 23).

On notera également que dans l'exemple illustré non limitativement sur les figures 2 et 4, le frein à main 3 comprend une embase 12 solidarisée fixement sur le tunnel 21 du plancher 2, comprenant une zone arrière définissant la zone 9 et logeant une partie des câbles 4 qui se dirige vers le siège arrière 23, et à laquelle est solidarisé en rotation un levier 8 destiné à être actionné manuellement par un passager avant installé sur un siège avant du véhicule 1. Au-delà de la zone arrière 9 de l'embase 12, les câbles 4 passent généralement sous la tôle définissant le tunnel 21 et donc sont protégés. Le levier 8 est par exemple couplé aux câbles 4 via un palonnier 22 (très partiellement visible sur la figure 4) logé dans l'embase 12.

Comme cela apparaît mieux sur la figure 3, une pièce moulée 6, selon l'invention, comprend une paroi 13 et des moyens de couplage 14.

Les moyens de couplage 14 sont destinés à être couplés à la zone 9 (ici la zone arrière de l'embase 12 du frein à main 3), afin d'immobiliser la pièce moulée 6 par rapport à cette embase 12 (et donc par rapport au plancher 2).

Par exemple, et comme illustré non limitativement sur les figures 3 et 4, les moyens de couplage 14 peuvent comprendre deux protubérances saillant d'une face inférieure 15 de la paroi 13 et destinées à être logées dans deux trous 16 définis, ici, dans l'embase 12 du frein à main 3 de part et d'autre des câbles 4 (et du palonnier 22). Mais dans une variante de réalisation les trous 16 pourraient être définis dans le tunnel 21, ou plus généralement dans une tôle participant à la définition du plancher 2.

On notera que dans l'exemple illustré non limitativement sur les figures 3 et 4, les deux protubérances 14 sont des fûts présentant des formes tronconiques de section semi circulaire. Cela facilite en effet leur emmanchement (éventuellement en force) dans les trous 16 associés. Mais elles pourraient présenter des formes tronconiques de section quelconque ou des formes coniques de section quelconque.

On notera également que dans l'exemple illustré non limitativement sur les figures 2 à 4, les protubérances 14 saillent de la face inférieure 15 d'une première partie 17 de la paroi 13, sur laquelle on reviendra plus loin.

La paroi 13 est destinée à être placée au-dessus des câbles 4 et définit non seulement une surface d'appui pour l'extrémité inférieure 11 de la jambe de calage 10 de l'embase 5 de siège d'enfant 24, mais également une interface de protection pour les câbles 4 couplés au frein à main 3.

Afin de résister à des contraintes minimales, par exemple de 700 daN, exercées par l'extrémité inférieure 11 d'une jambe de calage 10 d'embase 5 de siège d'enfant 24 en cas de freinage et/ou de choc, la pièce moulée 6 peut, par exemple, être réalisée en PP GF30 (polypropylène renforcé à 30% en fibres de verre).

On notera que la pièce moulée 6 est de préférence rigide (mais de préférence avec une flèche suivant la direction verticale Z d'au maximum 5 mm). Mais elle pourrait aussi être souple ou flexible selon le cahier des charges initial.

Grâce à cette pièce moulée 6 très résistante, installée entre les câbles 4 du frein à main 3 et l'extrémité inférieure 11 de la jambe de calage 10, ces câbles 4 (et le palonnier 22) ne sont plus endommagés ou déréglés lors d'un freinage et/ou d'un choc, et donc le frein à main 3 demeure opérant lorsqu'il est actionné par un passager avant du véhicule 1. Cela est particulièrement avantageux en raison du faible coût de fabrication de la pièce moulée 6 et du très faible encombrement de cette dernière (6) suivant les directions X, Y et Z.

On notera qu'afin de réduire au maximum l'encombrement de la pièce moulée 6, sa paroi 13 peut présenter une forme qui épouse la forme extérieure de la zone arrière 9 de l'embase 5 du frein à main 3. Cela permet en outre de respecter la partie fonctionnelle de la zone arrière 9 de l'embase 5 nécessaire au bon fonctionnement du frein à main 3, au réglage de ce dernier (3) et à d'éventuels changements des câbles 4 et/ou du palonnier 22.

Dans ce cas, et comme illustré non limitativement sur les figures 2 et 3, la paroi 13 peut comprendre une première partie 17 destinée à être placée à un premier niveau, et une seconde partie 20 prolongeant cette première partie P1 via un décrochement 18 vers le bas et destinée à être placée à un second niveau inférieur à ce premier niveau. Cela permet en effet d'épouser au mieux, ici, la forme de la zone arrière 9 de l'embase 5 du frein à main 3. En outre, ce décrochement 18 définit une butée longitudinale qui empêche l'extrémité inférieure 11 de la jambe de calage 10 de glisser vers l'avant (suivant la direction longitudinale X).

On notera également, comme illustré non limitativement sur les figures 3 et 4, que la paroi 13 peut comprendre une ondulation 19 définissant une alternance de nervures supérieures et inférieures destinées à être placées parallèlement à la direction longitudinale du véhicule 1. Ces nervures sont destinées à augmenter la rigidité de la pièce moulée 6 suivant la direction longitudinale X.

De préférence, cette ondulation 19 est définie au moins dans la seconde partie 20 de la paroi 13. Mais comme illustré non limitativement sur les figures 3 et 4, elle peut aussi être définie dans le décrochement 18. Une ondulation peut être également et éventuellement définie sur les protubérances (ou fûts) 14, suivant la direction verticale Z, afin de les rigidifier.

On notera également que la pièce moulée 6 est préférentiellement masquée (ou recouverte) par un tapis qui est placé sur le plancher 2 devant le siège arrière 23 et au-dessus d'elle (6).

## Revendications

1. Véhicule (1) comprenant un plancher (2) sur lequel sont installés des sièges avant, au moins un siège arrière (23), et, entre lesdits sièges avant, un frein à main (3) couplé à des moyens de freinage via des câbles (4) ayant une partie placée dans une zone (9) située devant une partie centrale dudit siège arrière (23) adaptée au couplage d'une embase (5) de siège d'enfant (24), ainsi qu'une pièce moulée (6) comprenant i) des moyens de couplage (14) destinés à être couplés à ladite zone (9), et ii) une paroi (13) destinée à être placée au-dessus desdits câbles (4) et définissant une surface d'appui pour une extrémité inférieure (11) d'une jambe de calage (10) de ladite embase (5) et une interface de protection pour lesdits câbles (4), couplée à ladite zone (9), **caractérisé en ce que** lesdits moyens de couplage (14) comprennent deux protubérances saillant d'une face inférieure (15) de ladite paroi (13) et destinées à être logées dans deux trous (16) définis dans une zone arrière d'une embase (12) dudit frein à main (3) définissant ladite zone (9), de part et d'autre desdits câbles (4)

2. Véhicule (1) selon la revendication 1, **caractérisé en ce que** la paroi (13) a une forme qui épouse une forme de ladite zone (9).

3. Véhicule (1) selon la revendication 2, **caractérisé en ce que** ladite paroi (13) comprend une première partie (17) destinée à être placée à un premier niveau et une seconde partie (20) prolongeant ladite première partie (17) via un décrochement (18) vers le bas et destinée à être placée à un second niveau inférieur audit premier niveau.

4. Véhicule (1) selon l'une des revendications 1 à 3, **caractérisé en ce que** ladite paroi (13) comprend une ondulation (19) définissant une alternance de nervures supérieures et inférieures destinées à être placées parallèlement à une direction longitudinale dudit véhicule (1).

5. Véhicule (1) selon la combinaison des revendications 3 et 4, **caractérisé en ce que** ladite ondulation (19) est définie au moins dans ladite seconde partie (20) de la paroi (13).

6. Véhicule (1) selon la combinaison des revendications précédentes combinées à la revendication 3, **caractérisé en ce que** lesdites protubérances (14) saillent de ladite face inférieure (15) de la première partie (17) de ladite paroi (13).

7. Véhicule selon l'une des revendications de 1 à 6, **caractérisé en ce qu'**il comprend un tapis placé sur ledit plancher (2) devant ledit siège arrière (23) et au-dessus de ladite pièce moulée (6) afin de masquer cette dernière (6).

8. Véhicule selon l'une des revendications 1 ou 7, **caractérisé en ce qu'**il est de type automobile.

## Patentansprüche

1. Fahrzeug (1) mit einem Boden (2), auf dem Vordersitze angebracht sind, mindestens einem Rücksitz (23) und zwischen den Vordersitzen eine Handbremse (3), die über Seile (4) mit einer Bremseinrichtung verbunden ist, die einen Teil aufweist, der in einem Bereich (9) angeordnet ist, der sich vor einem Mittelteil des Rücksitzes (23) befindet, der für die Verbindung eines Fußes (5) eines Kindersitzes (24) geeignet ist, sowie mit einem Formteil (6), das i) Kupplungsmittel (14) zum Koppeln mit dem Bereich (9) und ii) eine Wand (13) aufweist, die für über den Kabeln (4) angeordnet sein und eine Auflagefläche für ein unteres Ende (11) eines Keilschenkels (10) des Sockels (5) und eine mit dem Bereich (9) gekoppelte Schutzschnittstelle für die Kabel (4) definieren, **dadurch gekennzeichnet, dass** die Kopplungsmittel (14) zwei Vorsprünge umfassen, die von einer Unterseite (15) der Wand (13) vorstehen und dazu bestimmt sind, in zwei Löchern (16) aufgenommen zu werden, die in einem hinteren Bereich eines Sockels (12) der Handbremse (3) definiert sind, die den Bereich (9) definieren, beiderseits dieser Kabel (4)

2. Fahrzeug (1) nach Anspruch 1, **dadurch gekennzeichnet, dass** die Wand (13) eine Form aufweist, die einer Form des Bereichs (9) entspricht.

3. Fahrzeug (1) nach Anspruch 2, **dadurch gekennzeichnet, dass** die Wand (13) einen ersten Abschnitt (17), der auf einer ersten Ebene angeordnet werden soll, und einen zweiten Abschnitt (20) aufweist, der den ersten Abschnitt (17) über eine Ausnehmung (18) nach unten verlängert und auf einer zweiten Ebene, die niedriger als die erste Ebene ist, angeordnet werden soll.

4. Fahrzeug (1) nach einem der Ansprüche 1 bis 3, **dadurch gekennzeichnet, dass** die Wand (13) eine Welle (19) aufweist, die einen Wechsel von oberen und unteren Rippen definiert, die dazu bestimmt sind, parallel zu einer Längsrichtung des Fahrzeugs (1) angeordnet zu werden.

5. Fahrzeug (1) nach der Kombination der Ansprüche 3 und 4, **dadurch gekennzeichnet, dass** die Welle (19) wenigstens in dem zweiten Teil (20) der Wand (13) definiert ist.

6. Fahrzeug (1) nach der Kombination der vorhergehenden Ansprüche in Kombination mit Anspruch 3, **dadurch gekennzeichnet, dass** die Vorsprünge (14) von der Unterseite (15) des ersten Abschnitts (17) der Wand (13) vorstehen.

7. Fahrzeug nach einem der Ansprüche 1 bis 6, **dadurch gekennzeichnet, dass** es eine Matte umfasst, die auf dem Boden (2) vor dem hinteren Sitz (23) und über dem Formteil (6) angeordnet ist, um letzteres (6) zu verdecken.

8. Fahrzeug nach einem der Ansprüche 1 oder 7, **dadurch gekennzeichnet, dass** es ein Kraftfahrzeug ist.

## Claims

1. Vehicle (1) comprising a floor (2) on which front seats are installed, at least one rear seat (23), and, between said front seats, a handbrake (3) coupled to braking means via cables (4) having a part placed in a zone (9) located in front of a central part of said rear seat (23) adapted to the coupling of a child seat base (5) (24), and a molded part (6) comprising i) coupling means (14) intended to be coupled to said zone (9), and ii) a wall (13) intended to be placed in the said zone above said cables (4) and defining a bearing surface for a lower end (11) of a wedging leg (10) of said base (5) and a protective interface for said cables (4), coupled to said zone (9), **characterized in that** said coupling means (14) comprise two protuberances projecting from a lower face (15) of said wall (13) and intended to be housed in two holes (16) defined in a rear zone of a base (12) of said handbrake (3) defining said zone (9), on either side and other of the said cables (4)

2. Vehicle (1) according to claim 1, **characterized in that** the wall (13) has a shape which follows a shape of the said zone (9).

3. Vehicle (1) according to claim 2, **characterized in that** the said wall (13) comprises a first part (17) intended to be placed at a first level and a second part (20) extending the said first part (17) via a downward step (18) and intended to be placed at a second level lower than the said first level.

4. Vehicle (1) according to one of claims 1 to 3, **characterized in that** the said wall (13) comprises a corrugation (19) defining an alternation of upper and lower ribs intended to be placed parallel to a longitudinal direction of the said vehicle (1).

5. Vehicle (1) according to the combination of claims 3 and 4, **characterized in that** said undulation (19) is defined at least in said second part (20) of the wall (13).

6. Vehicle (1) according to the combination of the preceding claims combined with claim 3, **characterized in that** said protuberances (14) project from said lower face (15) of the first part (17) of said wall (13).

7. Vehicle according to one of claims 1 to 6, **characterized in that** it comprises a belt placed on the said floor (2) in front of the said rear seat (23) and above the said molded part (6) in order to mask the latter (6).

8. Vehicle according to either of claims 1 and 7, **characterized in that** it is of the motor vehicle type.
